# EUROPÄISCHE PATENTSCHRIFT

(11) **EP 4 129 821 B1**
(45) Veröffentlichungstag und Bekanntmachung des Hinweises auf die Patenterteilung: **30.07.2025**
(21) Anmeldenummer: 22171114.6
(22) Anmeldetag: 02.05.2022
(51) Int. Cl.: B64D 9/00, B64C 1/20, B64F 1/32

(54) **BELADEHILFE**
LOADING AID
AIDE AU CHARGEMENT

(30) Priorität: 06.08.2021 EP 21190183; 24.09.2021 EP 21198967
(43) Veröffentlichungstag der Anmeldung: 08.02.2023
(73) Patentinhaber: Losch Airport Equipment GmbH, 70629 Stuttgart (DE)
(72) Erfinder: Losch, Max, 72820 Sonnenbühl-Genkingen (DE)
(74) Vertreter: Jeck, Jonathan

(56) Entgegenhaltungen:
- EP-A1- 0 887 288
- JP-A- H06 234 406
- US-A- 6 039 288
- US-A1- 2017 217 561

## Beschreibung

Die vorliegende Erfindung betrifft eine Beförderungseinheit für Gebrauchsgegenstände in einem Hold eines Flugzeugs gemäß dem Anspruch 1.

Eine solche Beförderungseinheit ist mit einem Grundkörper mit einer Deckseite und einer Bodenseite, einer Mehrzahl von Rollelementen, welche aus der Deckseite herausragen, an der Beförderungseinheit stirnseitig angeordneten Verbindungselementen, zur lösbaren Verbindung von jeweils zwei Beförderungseinheiten, und mit auf der Bodenseite angeordneten rutschfesten Elementen bereitgestellt.

Zum Be- und Entladen eines Holds im Bug eines Flugzeugs werden üblicherweise Förderbänder verwendet, mittels welcher die Gepäckstücke zwischen einem Transportfahrzeug und der Luke des Holds befördert werden. Von dort aus müssen die Gepäckstücke von Hand in die hinteren Bereiche des Holds transportiert werden, um den Laderaum des Flugzeugs vollständig ausnutzen zu können.

Aus dem Stand der Technik sind Hilfestellungen bekannt, bei denen ein Förderband mit einer Verlängerung als beweglicher Arm bereitgestellt ist, welche in die Luke des Holds hineinragt und über eine kurze Distanz eine Biegung aufweist, welche die Gepäckstücke dem Innenraum des Holds zumindest ein Stück weit zuführt.

Diese Lösung ist jedoch recht kostspielig und gerade bei kleineren Flugzeugen hinsichtlich der Wendigkeit des Arms im Hold pro-blematisch.

EP 0 8387/28841 offenbart eine Rollenmatte, die eine Anzahl miteinander verbundener Rollenschalen mit Rollen zum Tragen von Gütern umfasst, die entlang der Matte bewegt werden, wobei ein Merkmal darin besteht, die Rollenschalen einzeln an einer flexiblen Grundplatte aus Gummi oder gummiähnlichem Material zu befestigen.

JP H06 234406 zeigt eine Platte mit Rollen.

US 6,039,288 lehrt eine Bodeneinheit zur Verwendung als Teil des Frachtdecks eines Flugzeugs zur Erleichterung der Aufnahme und Umpositionierung von Fracht, bestehend aus einem Hohlprofil mit einer durchgehenden Deckfläche und einer parallel dazu angeordneten Hubfläche. Die Abdeckfläche und die Bodenfläche sind durch mehrere in Längsrichtung der Bodeneinheit verlaufende Profilstege voneinander getrennt. Die Deckfläche weist eine Vielzahl von Aufnahmeöffnungen zur Aufnahme von Kugelelementen auf.

US 2017/217561 offenbart ein System, ein Verfahren und eine Vorrichtung für ein System zur Handhabung von Fracht, das mit einer Kugelmatte ausgestattet ist. In einer oder mehreren Ausführungsformen umfasst ein Verfahren zum Transport von Fracht über eine gestufte Schwelle und in ein geneigtes Abteil das Bewegen der Fracht über die gestufte Schwelle und auf eine Kugelmatte, die sich in dem geneigten Abteil befindet, wobei die Kugelmatte in einer im Wesentlichen horizontalen Position angeordnet ist.

Die vorliegende Erfindung stellt sich die Aufgabe, eine Hilfestellung für das Bodenpersonal beim Be- und Entladen eines Flugzeugholds bereitzustellen, welche auf die individuellen Gegebenheiten der verschiedenen Flugzeugtypen situationsgerecht anpassbar ist und die Ergonomie für das Bodenpersonal in den beengten Räumlichkeiten des Flugzeugholds verbessert.

Diese Aufgabe wird erfindungsgemäß durch eine Vorrichtung mit den Merkmalen des Anspruchs 1 gelöst.

Bevorzugte Ausführungsformen sind in den abhängigen Ansprüchen angegeben.

Eine Beförderungseinheit kann vorzugsweise eine handliche Größe aufweisen, welche von einer einzelnen Person problemlos in dem engen Innenraum des Flugzeugrumpfs ausgelegt werden kann. Durch das Aneinanderreihen von mehreren der erfindungsgemäßen Beförderungseinheiten lässt sich eine individuelle Beförderungsbahn für Gepäckstücke im Hold des Flugzeugrumpfs anpassen, wodurch in einfacher Weise Gepäckstücke vom Bereich der Ladeluke mit nur geringem Kraftaufwand über viele Meter hinweg verschoben werden können, was sowohl den körperlichen Einsatz als auch die Zeit reduziert, welche zum Beladen des Flugzeugs erforderlich ist.

Üblicherweise wird das Gepäck im Innenraum des Flugzeugrumpfs über dem blanken Metallboden verschoben. Durch die enormen Reibungsverluste ist ein erheblicher Kraftaufwand erforderlich, um das Gepäck von der Gepäcksluke bis in die hintersten Winkel des Flugzeugrumpfs zu befördern.

Die erfindungsgemäß an dem Grundkörper der Beförderungseinheit angeordneten Rollelemente, welche aus der Deckseite des Grundkörpers herausragen, werden die Reibungsverluste und damit auch der Kraftaufwand beim Verschieben der Gepäckstücke verringert.

Während dem Entladen des Holds vergrößert sich sukzessive der zur Verfügung stehende Stauraum mit abnehmender Beladung. Dies hat zur Folge, dass das Bodenpersonal tiefer in den Hold eindringen muss, um an die weiteren Gepäckstücke heranzukommen.

Um die dabei gebildete Wegstrecke zwischen dem Gepäck und der Beladeluke zu überbrücken, kann zunächst eines, der erfindungsgemäßen Beförderungseinheiten und mit sukzessiver Entladung mehrerer der Beförderungseinheiten zu einer zusammenhängenden Beförderungsbahn zusammengefügt werden,

Hierzu sind an der jeweiligen Beförderungseinheit die stimseitig angeordneten Verbindungselemente zur lösbaren Verbindung von jeweils zwei Beförderungseinheiten vorgesehen, Hierdurch lässt sich die gebildete Beförderungsbahin situationsadäquat ergänzen oder verkürzen, sodass zu jedem Zeitpunkt die Ergonomie für das Bodenpersonal sichergestellt ist.

Vorzugsweise weist eine Beförderungseinheiten dabei eine Länge von 40 cm bis 120 cm, bevorzugt 60 cm bis 100 cm und eine Breite von 20 cm bis 100 cm, bevorzugt 60 cm bis 80 cm auf. Hierdurch hat ein einzelnes Element, also eine Beförderungseinheiten eine Größe, welche sich durch eine einzelne Person ohne unzumutbaren Kraftaufwand in den beengten Räumen des Holds transportieren und auslegen lässt.

Besonders bevorzugt weist eine Beförderungseinheiten eine quadratische oder zumindest rechteckige Form auf.

Die aus der Deckseite des Grundkörpers herausragenden Rollelemente haben die Funktion, die Reibung zwischen Gepäck und Auflagefläche zu vermindern.

Die Verbindungselemente können die einzelnen Beförderungseinheiten form- und/oder kraftschlüssig miteinander verbinden, wodurch diese gemeinsam ein mobiles Förderband bilden, das flexibel in Länge und Position am Flugzeugrumpf anpassbar ist. Das Förderband kann auch als Rollenband bezeichnet werden.

Die Verbindungselemente können auch bereitgestellt sein, eine Kugel-Pfanne Verbindung zwischen benachbarten Beförderungseinheiten auszubilden, wobei jeweils ein Teil der Verbindung (Kugel(gelenk)/Pfanne) an jeweils einem der benachbarten Beförderungseinheiten angeordnet sein kann.

Insbesondere um den laufenden Betrieb beim Be- und Entladen des Flugzeugrumpfs nicht über Gebühr zu behindern, kann die lösbare Verbindung zwischen den Beförderungseinheiten in einfacher Weise, beispielsweise durch Verlagerung von einzelnen Beförderungseinheiten relativ zueinander, wie beispielsweise ein Anheben einer der Beförderungseinheiten gegenüber einer verbundenen Beförderungseinheiten, überwindbar sein.

Die auf der Bodenseite der Beförderungseinheiten angeordneten rutschfesten Elemente verhindern vorzugsweise zum einen eine unerwünschte Verlagerung des aus mehreren Beförderungseinheiten gebildeten Förderbands als auch eine Relativverschiebung einzelner miteinander verbundenen Beförderungseinheiten, wodurch je nach Art der Verbindungselemente eine Verbindung zwischen zwei Beförderungseinheiten unerwünscht lösbar wäre.

Vorzugsweise stabilisiert das mindestens eine rutschfeste Element die Beförderungseinheiten und/oder das aus den Beförderungseinheiten gebildete Förderband in einer ausgewählten Position auf dem Boden des Flugzeugrumpfs, welcher beispielsweise aus einem Metall, insbesondere aus Aluminium gefertigt sein kann.

Bevorzugte Weiterbildungen der vorliegenden Erfindung sind in den abhängigen Ansprüchen angegeben.

Nach einer bevorzugten Weiterbildung der vorliegenden Erfindung ist es vorgesehen, dass die Rollelemente gegenüber der Bodenseite zurücktretend bereitgestellt sind, also nicht über diese hinausragen. Nach der vorliegenden Erfindung kann es zweckmäßig sein, dass die Rollelemente nur zu einer Seite, nämlich zu der Deckseite gegenüber der Oberfläche des Grundkörpers hervorragen, wodurch diese bereit gestellt sind, mit Gepäck zu kontaktieren. Bevorzugt sind die Rollelemente gegenüber der gegenüberliegenden Bodenseite des Grundkörpers versenkt angeordnet, wodurch diese der Oberfläche der Bodenseite gegenüber nicht hervorstehen. Dies kann einer ortsfesten Anordnung der Beförderungseinheiten in einer ausgewählten Position auf dem Boden des Holds zuträglich sein.

Zweckmäßigerweise kann es vorgesehen sein, dass mindestens zwei Rollelemente eine zueinander koaxiale Rotationsachse aufweisen. Die Beförderungseinheit kann auch mit einer Mehrzahl von Rollelementen nebeneinander bereitgestellt sein, welche demnach in Reihen von Rollelementen auf dem Grundkörper der Beförderungseinheiten vorgesehen sein können.

Hierdurch verteilt sich die Lagerreibung des Gepäckstücks gegenüber einer einzelnen Lagerwelle für ein Rollelement, was die Reibungsminderung und die Verschiebbarkeit des Gepäckstücks gegenüber der Beförderungseinheiten weiter verbessern kann.

Vorzugsweise ist es vorgesehen, dass der Grundkörper parallel zur Rotationsachse der Rollelemente zueinander beweglich gelagerte Segmente aufweist, wodurch der Grundkörper an sich aufrollbar ausgebildet ist. Zwischen den einzelnen Rotations.-achsen der Rollelemente beziehungsweise zwischen den Gruppen von zueinander koaxial ausgebildeten Rotationsachsen von Rollelementen beziehungsweise übergeordneten Gruppen von parallel zueinander ausgerichteten Rotationsachsen oder Gruppen von Rotationsachse kann der Grundkörper einen Gelenksbereich aufweisen, welcher parallel den Achsen oder den Gruppen von Achsen ausgerichtet ist, wodurch insgesamt eine Forrnflexibilität des Grundkörpers bereitgestellt ist.

Die gegeneinander beweglich gelagerten Segmente können insgesamt eine Aufrollbarkeit des Grundkörpers parallel zu den einzelnen Rotationsachsen der Rollelemente bereitstellen und/oder miteinander verbundene gemeinsame Gelenkachse bildende Abschnitte aufweisen.

Besonders bevorzugt ist die bewegliche Lagerung der einzelnen Segmente/Beförderungseinheiten zueinander aus einer ebenen Ausrichtung des Grundkörpers/der Segmente zueinander in einer Richtung ermöglicht und in einer entgegengesetzten Rotationsrichtung verhindert. Dadurch kann zwar eine Aufrollbarkeit des Grundkörpers grundsätzlich in einer Richtung bereitgestellt sein wobei jedoch zusätzlich verhindert ist, dass sich die einzelnen Segmente des Grundkörpers gegeneinander in unvorteilhafter Weise verschieben/verdrehen, wodurch ungewollte, beispielsweise pyramidenartige Erhöhungen eine ebene Ausrichtung des Grundkörpers stören.

Vorzugsweise ist eine Torsion zweier benachbarter Segmente quer zur Aufrollrichtung des Grundkörpers, also quer zur jeweiligen Gelenkachse zwischen zwei Segmenten, durch eine torsionsstarre Verbindungsachse/Gelenkachse zwischen den benachbarten Segmenten verhindert.

Grundsätzlich können die Beförderungseinheiten aus einem Hartgummi gebildet sein oder maßgebliche Anteile, an Hartgummi aufweisen. In der Oberfläche der Beförderungseinheiten können Aufnahmevertiefungen vorgesehen sein, welche zumindest bereichsweise eine schlüssellochförmige Formgebung aufweisen können. In den Aufnahmevertiefungen können zum einen die einzelnen Rollen/Rolle Elemente Betriebsgemäß versenkbar sein/angeordnet werden. Zum anderen können die Wellen /Achsen der einzelnen Rollen darin festlegbar sein. Zur Festlegung der Wellen/Achsen der einzelnen Rollen kann die schlüssellochförmige Formgebung zumindest in den Endbereichen der Wellen/Achsen in der Aufnahmevertiefung vorgesehen sein.

Benachbarte Rollen, deren Drehachsen zueinander in etwa koaxial ausgerichtet sein können (also Nebeneinander angeordnete Rollen), können zueinander beabstandet sein, wodurch eine Lücke zwischen den einzelnen Rollen/Rollkörpern bereitgestellt sein kann (Reihen von Rollen), Folglich können an einer Beförderungseinheit eine Vielzahl von Rollen, also Rollelernenten, sowohl in Reihen angeordnet sein, in welchen die Rotationsachsen in etwa koaxial zueinander ausgerichtet sein können. Weiterhin sind einzelne Reihen von Rollen parallel zueinander ausgerichtet. Dadurch kann eine flächige Verteilung von Rollelementen über die Oberfläche der Beförderungseinrichtung bereitgestellt sein.

Nach der vorliegenden Erfindung sind die Lücken zwischen den Rollen/Rollelement/Rollkörpern in den einzelnen Reihen jeweils an derselben Stelle vorgesehen, wodurch über eine Mehrzahl von Rollelementreihen hinweg quer zur Rotationsachse der Rollen ausgebildete Schlitze bereitgestellt sein können. Diese Schlitze erstrecken sich parallel zur Transportrichtung oder Abrollrichtung der Rollelemente und können in Rotationsrichtung der Rollen übereinstimmende Bereiche abbilden, in denen keine Rollelemente vorgesehen sind. Bevorzugt ist mindestens ein Schlitz, vorzugsweise 3, 4, 5, 6 oder mehr Schlitze vorgesehen, welche aus der Mehrzahl von Lücken zwischen den Rollelementen in den einzelnen Reihen gebildet sind.

Erfindungsgemäß ist es vorgesehen, dass die Beförderungslinie / Beförderungsband / Beförderungsvorrichtung, welche auch als Beförderungssystem bezeichnet werden kann, mindestens ein Gebrauchsgegenstand/Gepäckstück tragendes Plattenelement oder Tablett aufweisen. Das Tablett kann vorzugsweise eine Breite aufweisen, welche gleich oder geringer ist als die Breite der Beförderungslinie beziehungsweise der beförderungslinienbildenden Beförderungseinheiten. Dasselbe kann auch für die Länge der Tabletts gelten.

Besonders bevorzugt ist es vorgesehen, dass der Ort und der Abstand der Schlitze auf einer Beförderungseinheit zueinander bei mindestens 2 benachbarten, vorzugsweise allen Beförderungseinheiten der Beförderungslinie gleich ist.

Nach der Erfindung ist es vorgesehen, dass das Tablett/Plattenelement auf seiner der Beförderungslinie zugewandten Unterseite mindestens 2 oder 3 oder 4 oder 5 oder 6 oder 7 oder 8 oder 9 oder 10 oder mehr längliche Erhebungen/Schienen aufweist, welche parallel zueinander ausgerichtet sind und in ihrem Abstand auf einen Abstand zwischen mindestens zwei der Schlitze/Lücken zwischen den Rollelementen angepasst ist. Der Abstand zwischen den Erhebungen/Schienen kann somit auf den Abstand zwischen den Schlitzen der Beförderungseinheiten untereinander angepasst sein. Dadurch können die Erhebungen/Schienen (gemeinsam) in die Schlitze eingreifen, wodurch die Erhebungern/Schienen in den Schlitzen beim Abrollen der Tabletts auf den Rollelementen führbar sind.

Bevorzugt sind die Erhebungen/Schienen ihrer Höhe nach geringer ausgebildet als die Rollelemente aus der Oberfläche der Beförderungseinheiten ragen. Dadurch kann ein ungehindertes Abrollen des Tabletts auf den Rollelementen der Beförderungseinheiten gewährleistet sein.

Die Lücken können also von jeweils 2 benachbarten Rollelementen in einer Reihe von Rollelementen gebildet sein. Die Schlitze können aus mehreren in Abrollrichtung der Rollelemente hintereinander angeordneten Lücken von parallel angeordneten Reihen von Rollelementen gebildet sein.

Mehrere Schlitze auf einer Beförderungseinheit können parallel zueinander und/oder orthogonal zur Rotationsachse der Rollelemente ausgerichtet sein.

Der Abstand zwischen den mehreren Schlitzen und der Abstand der länglichen Erhebungen auf der Unterseite des Tabletts/Plattenelements können einander entsprechen.

Eine Mehrzahl von Beförderungseinheiten und mindestens ein Tablett können ein Beförderungssystem bilden.

Nach einer besonders bevorzugten Weiterbildung der vorliegenden Erfindung ist es vorgesehen, dass der Grundkörper in einem Rahmen angeordnet ist.

Dieser Rahmen kann die gewünschte Ausrichtung des Grundkörpers zusätzlich stabilisieren in dem dieser vorzugsweise die Flexibilität des Grundkörpers zumindest temporär herabsetzt oder aufhebt.

An dem Rahmen können grundsätzlich auch die Verbindungselemente zur Verbindung von Beförderungseinheiten bereitgestellt sein.

Vorzugsweise ist es vorgesehen, dass der Rahmen den Grundkörpers zumindest umfangseitig umgibt und diesen fixiert.

Nach einer zweckmäßigen Weiterbildung der vorliegenden Erfindung ist es vorgesehen, dass die Verbindungselemente komplementär zueinander ausgebildet sind. Dies kann insbesondere geometrische Ausbildungen der Verbindungselemente sowie deren Ausrichtung betreffen. Beispielsweise können Hakenelemente sich geometrisch zu einer Verbindung zwischen zwei Beförderungseinheiten ergänzen. Die Hakenelemente an gegenüberliegenden Stirnseiten der Beförderungseinheiten beispielsweise identisch jedoch spiegelverkehrt zueinander angeordnet sein, wodurch für jeweils benachbarten Beförderungseinheiten eine einfache formschlüssige Verbindung bereitgestellt sein kann.

Komplementär kann nach der vorliegenden Erfindung jedoch auch bedeuten, dass auf der einen Seite der Beförderungseinheiten Haken und auf der anderen Seite beispielsweise Ösen oder anderer Aufnahmen für die Haken bereitgestellt sind. Komplementäre Verbindungsmittel können auch Zapfen und entsprechende Vertiefungen zur Aufnahme der Zapfen an gegenüberliegenden Stirnseiten der Beförderungseinheiten sein. Funktionelle komplementäre Verbindungselemente können sich auch beispielsweise auf eine Klettverschlussverbindung mit Hakenelementen auf der einen Seite und Fließ beziehungsweise Gewebeelementen auf der anderen Seite, welche mit den Hakenelementen in Eingriff bringbar sind beziehen. Funktionelle komplementäre Verbindungen können auch beispielsweise magnetische Verbindungen sein, wobei auf einer der Stirnseiten der Beförderungseinheiten ein Magnet und auf der gegenüberliegenden Stirnseite ein weiterer, den ersten Magneten anziehenden Magnet oder ein metallisches, beispielsweise ferromagnetisches Gegenstück bereitgestellt ist.

Besonders bevorzugt ist es vorgesehen, dass die Verbindungselemente komplementär zueinander ausgebildet sind.

Zweckmäßigerweise ist es vorgesehen, dass die Verbindungselemente gegenläufig orientierte Haltebereiche oder Haken aufweisen, welche ausgebildet sind, Form und/oder kraftschlüssig ineinanderzugreifen.

Nach einer besonders bevorzugten Weiterbildung der vorliegenden Erfindung ist es vorgesehen, dass die Verbindungselemente Magnete und/oder Klettverschlussverbindungen bilden.

Nach der vorliegenden Erfindung wird auch ein Verfahren zum Beladen eines Flugzeugholds mit Ladegut mittels eines Beförderungssystems nach einem der Ansprüche 1 bis 9 beschrieben, bei welchem ein Förderband einer Ladeöffnung an dem Flugzeug betriebsgemäß zugestellt wird, wobei an das Förderband anschließend auf dem Boden des Flugzeugholds eine Beförderungseinheit/Beförderungslinie für Ladegut, verlagerungsresistent/rutschfest angeordnet wird, die Beförderungseinheit aufweisend einen flachen Grundkörper mit einer Deckseite und einer Bodenseite eine Mehrzahl von Rollelementen, welche aus der Deckseite herausragen und eine Kontaktoberfläche, für die auf und gegenüber der Beförderungseinheit/Beförderungslinie zu bewegende Gebrauchsgegenstände bilden, wobei die Beförderungseinheit/Seförderungslinie mit der Rollrichtung/Drehachse seiner Rollelemente in etwa längs zur Längsachse des Flugzeugs ausgerichtet wird, dass Ladegut über das Förderband der Deckseite der Beförderungseinheit/Beförderungslinie in dem Flugzeughold zugestellt wird, dass bereits auf der Beförderungseinheit befindliche Ladegut im Nahbereich des Förderbands in seiner Position durch Ladegut von dem Förderband verdrängt und dadurch entlang der Beförderungseinheit weiter in den Flugzeughold verlagert wird. Vorzugsweise wird das Verdrängen von Ladegut auf den Beförderungseinheiten manuell oder durch die Schubkraft des Förderbands bereitgestellt.

Besonders bevorzugt wird an die Beförderungseinheit anschließend mindestens eine weitere Beförderungseinheit, vorzugsweise über an den Beförderungseinheiten stirnseitig angeordnete Verbindungselemente, in gleicher Weise ausgerichtet und/oder angekoppelt und das Ladegut wird von der an das Förderband anschließenden Beförderungseinheit auf die mindestens eine weitere Beförderungseinheit durch von dem Förderband nachfolgendes Ladegut verdrängt. Mehrere Beförderungseinheiten können eine Beförderungslinie bilden.

Im Bereich zwischen Förderband und der ersten anschließenden Beladehilfe kann ein EingangselementfÜbergangsstück angeordnet sein, welches einen Übergang vom Förderband zur Beladehilfe bildet. Hierbei kann es sich um ein in Förderrichtung des Förderbands ausgerichtete Beförderungseinrichtung handeln. Die Drehrichtung der Rollen dieser Beförderungseinrichtung sind also bevorzugt gleichgerichtet mit der Förderrichtung des Förderbands.

Das Eingangselement/Übergangsstück kann gegenüber den Beförderungseinheiten eine verkürzte Länge in Rollrichtung der Rollen des Eingangselements aufweisen.

Am Ende der aneinander angeordneten Beförderungseinheiten, also am Ende der Beförderungseinrichtung/Beförderungslinie kann ein weiteres höhenverstellbares Förderband angeordnet sein, welches das Bodenpersonal bei der finalen Positionierung und Stapelung von Ladegut unterstützen kann.

Das Eingangselement kann zur besseren Positionierung gegenüber der ersten Beförderungseinheit mit diesem lösbar verbindbar sein. Es kann beispielsweise eine Rast oder Hakenverbindung zwischen dem Eingangselement und der ersten Beförderungseinheit vorgesehen sein.

Zur Übertragung der Vorschubkräfte des Förderbands auf Ladegut, welches sich auf der Beförderungseinrichtung befindet, kann im Bereich, insbesondere am ersten oder zweiten Beförderungselement oder an dem Eingangselement/Übergangsstück eine Führungseinrichtung, beispielsweise als Leitblech oder eine vergleichbare, sich vorzugsweise gegenüber dem Grundkörper des Beförderungselements vertikal abhebende Einrichtung angeordnet sein, welche das Ladegut in seiner Transportrichtung zur Längsausrichtung der Beförderungseinrichtung ausrichtet. Das Leitblech kann eine Kurve von beispielsweise in etwa 90°, beschreiben, entlang welcher das Gepäck von dem ersten oder der zweiten Beförderungselement oder dem Eingangselement/Übergangsstück auf die weiteren Beförderungselemente in seiner Transportrichtung umlenkbar ist.

Die Führungseinrichtung kann eine Anordnung von Rollen oder Wälzkörpern aufweisen, welche jeweils mit einer vertikal ausgerichteten Rotationsache ausgebildet sind. Die Rollen oder Wälzkörper können in ihrer Anordnung zueinander eine Bogenform beschreiben oder zumindest entlang einer Bogenform angeordnet sein. Die Bogenform kann den Wechsel der Transportrichtung vom Förderband und/oder dem ersten Beförderungselement zu den in etwa zur Längsrichtung des Flugzeugs ausgerichteten Beförderungseinrichtungen, also der eigentlichen Beförderungseinrichtung /Beförderungslinie nachvollziehen. Die Bogenform kann in etwa einen Richtungswechsel von Transportgut/Gepäck um 90° vom Förderband zu der Beförderungseinrichtung oder Beförderungseinrichtung/ Beförderungslinie begleiten.

Als Führungseinrichtung kann grundsätzlich auch beispielsweise ein Mitarbeiter im Übergangsbereich zwischen Förderband und Beförderungseinrichtung bereitgestellt sein, welcher das Ladegut bei seinem Richtungswechsel unterstützt.

Die Förderrichtung des Förderbands und die Transportrichtung von Ladegut auf der Beförderungseinrichtung müssen nicht parallel oder gleichgerichtet zueinander sein. Die Förderkraft beziehungsweise der Vorschub des Förderbands kann durch das Leitblech, also eine Umlenkeinrichtung, umgelenkt/ neu bezüglich der Transportrichtung von Transportgut/Gepäck orientiert werden. Von dem Förderband nachfolgendes Ladegut, welches die Beförderungseinrichtung erreicht, kann vorangehendes Ladegut in der Erstreckungsrichtung der Beförderungseinrichtung verschieben.

Eine Veränderung des Bewegungs-/Kraftvektors, welchen das Ladegut beim Übergang von dem Förderband auf die Beförderungseinrichtung erfährt, wird durch die Umlenkeinrichtung, also beispielsweise das erwähnte Leitblech, unterstützt oder vermittelt. Anstelle eines Leitblechs kann auch das Ladegut von der ersten Beförderungseinheit, welche dem Förderband gegenüberliegt, händisch in Richtung der zweiten und den fortfolgenden Beförderungseinheiten in Richtung dessen Ende verschoben werden, wodurch die erste Beförderungseinheit, für weiteres nachfolgendes Gepäck freigegeben wird. Durch dieses Verfahren ist es nicht mehr erforderlich, das Gepäck händisch durch den gesamten Hold des Flugzeugs einzeln zu bewegen, da die Gepäckstücke durch ihre Aneinanderreihung auf der Beförderungseinrichtung und das jeweilige Verschieben des letzten Gepäckstücks um eine geringe Distanz, dass Ladegut als Gesamtheit in einfacher Weise tiefer in den Hold hinein, verschiebbar ist.

Nach einer bevorzugten Weiterbildung der Erfindung ist es vorgesehen, dass eine Führungseinrichtung das auf der Beförderungslinie befindliche Gepäck durch nachfolgendes Gepäck von dem Gepäckförderband von der Förderbandrichtung in eine Erstreckungsrichtung der Beförderungslinie umlenkt und weiter in den Flugzeughold hineinschiebt.

Eine Ausführungsform der vorliegenden Erfindung wird anhand der beigefügten Zeichnungen weiter erläutert.

In den Zeichnungen zeigen:
- Figur 1: eine seitliche Querschnittsansicht durch die erfindungsgemäße Beförderungseinheit,
- Figur 2: eine perspektivische Ansicht auf die Deckseite der erfindungsgernäßen Beförderungseinheit und
- Figur 3: eine perspektivische Ansicht auf die Bodenseite der erfindungsgemäßen Beförderungseinheit

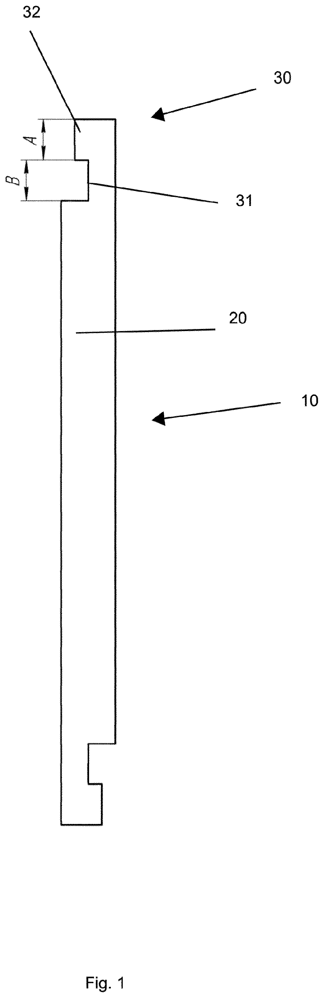

Figur 1 zeigt eine Querschnittsansicht durch die erfindungsgemäße Beförderungseinheit 10 mit einem Grundkörper 20 welches an beiden Enden Verbindungselemente 30 aufweist, Nach der vorliegenden Ausführungsform kann das Verbindungselement 30 aus einem Hakenelement gebildet sein, welches vorzugsweise eine Vertiefung 31 und eine Erhöhung 32 aufweisen kann.

Diese sind hinsichtlich der beiden Enden des Grundkörpers 20 in entgegengesetzte Richtungen ausgerichtet und zueinander vorzugsweise komplementär, sodass die Verbindungselemente eine Form und/oder kraftschlüssige Verbindung zwischen zwei Beförderungseinheiten 10 bilden, in dem die Hakenelemente von benachbarten Beförderungseinheiten 10 ineinandergreifen. Vorzugsweise können dabei die Vertiefung 31 und die Erhöhung 32 dieselbe Länge (A/B) aufweisen, was einer formschlüssigen Verbindung zwischen Verbindungselement 30 benachbarte Beförderungseinheiten C zuträglich sein kann. Vorzugsweise sind die Verbindungselemente Bereitgestellt benachbarte Beförderungseinheiten eben und vorteilhaft ohne Höhenunterschiede miteinander zu verbinden.

Die Dicke der Vertiefung 31 kann dabei der Höhendifferenz zwischen Erhöhung und Deckseite der Beförderungseinheit 10 entsprechen.

Die Vertiefung 31 und die Erhöhung 32 können gemeinsam ein Hakenelement als Verbindungselement 30 bilden.

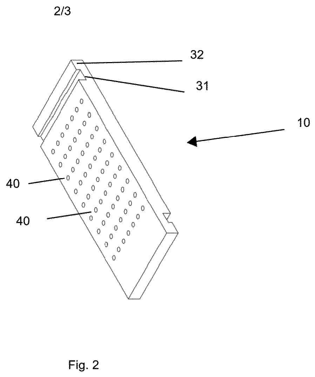

Figur 2 zeigt eine perspektivische Draufsicht auf die erfindungsgemäße Beförderungseinheit 10, Diese weist auf seiner Oberfläche eine Mehrzahl von Rollelementen 40 auf, welche gegenüber der Oberfläche der Deckseite überstehen. Dadurch kann für das über die Beförderungseinheit 10 bewegten Gepäckstücke eine abrollend Reibungsherabsetzung bei Kontakt mit den Rollelementen 40 bereitgestellt sein. Die Rollelemente 40 können zumindest in dem Bereich der für Beförderungseinheit 10 vorgesehen sein, welcher Kontakt mit Gepäckstücken hat. Dies kann insbesondere ein zentraler oder seitlicher Bereich der Oberfläche der Deckseite zwischen den Verbindungselementen sein.

Die einzelnen Rollelemente 40 können in Reihen zueinander angeordnet sein, welche quer zu einer Längsachse der Beförderungseinheit 10 ausgerichtet ist. Die Längsachse kann sich zwischen den beiden Verbindungselementen 30 der Beförderungseinheit 10 erstrecken.

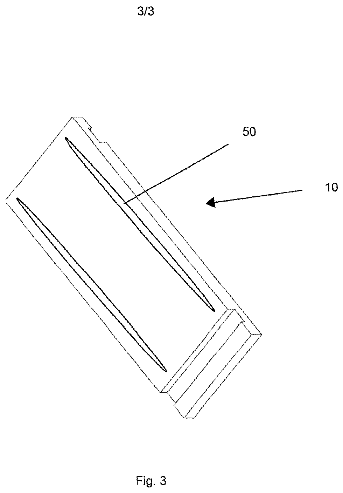

Figur 3 zeigt eine Bodenseite der erfindungsgemäßen Beförderungseinheit. Wie aus Figur 3 ersichtlich, stehen die Rollelemente vorzugsweise nicht gegenüber der Bodenseite der Beförderungseinheit hervor, wodurch eine ortsfeste Festlegung der Beförderungseinheit 10 in einem Bodenbereich eines Flugzeugholds ermöglicht ist

Zur Verbesserung der ortsfesten Fixierung kann auf der Bodenseite mindestens ein rutschfestes Element 50 angeordnet sein, welches gegenüber einem Untergrund, z.B. im Hold, eine erhöhte Reibung/Haftung beziehungsweise einen Adhäsiveffekt bereitstellt.

Anstelle der in den Figuren 1 bis 3 dargestellten hakenförmigen Verbindung als Verbindungselement 30 können beispielsweise auch magnetische Verbindungen, Klettverschlussverbindungen, Haken-Öse Verbindungen oder sonstige reversible Verbindungsmöglichkeiten bereitgestellt sein, welche es gestatten, in einfacher Weise Zwei benachbarte Beförderungseinheiten schnell und effizient zu verbinden oder zu lösen.

## Patentansprüche

1. Flexibel festlegbare Beförderungssystem für die Verlagerung von Gebrauchsgegenständen in einem Hold eines Flugzeugs, aufweisend mindestens zwei gemeinsam eine Beförderungsoberfläche bildende Beförderungseinheiten mit jeweils
- einem Grundkörper (20) mit einer Deckseite und einer Bodenseite
- einer Mehrzahl von Rollelementen (40), welche aus der Deckseite herausragen und eine Kontaktoberfläche für die auf und gegenüber der Beförderungslinien zu bewegenden Gebrauchsgegenstände bilden,
- und vorzugsweise
- an der Beförderungseinheit stirnseitig angeordneten Verbindungselementen (30), zur lösbaren Verbindung von jeweils zwei Beförderungseinheiten (10). **dadurch gekennzeichnet,**
**dass** Lücken zwischen den Rollelementen (40) in den einzelnen Reihen jeweils an derselben Stelle vorgesehen sind, wodurch über eine Mehrzahl von Rollelementreihen hinweg quer zu einer Rotationsachse der Rollelemente (40) ausgebildete Schlitze bereitgestellt sind,
**dass** das Beförderungssystem ein gebrauchsgegenstandtragendes Plattenelement oder Tablett aufweist und
**dass** das Tablett oder Plattenelement auf seiner dem Beförderungssystem zugewandten Unterseite mindestens zwei längliche Erhebungen aufweist, welche parallel zueinander ausgerichtet sind und in ihrem Abstand auf einen Abstand zwischen mindestens zwei der Schlitze/Lücken zwischen den Rollelementen (40) angepasst ist.

2. Beförderungssystem nach Anspruch 1, **dadurch gekennzeichnet,**
**dass** die Rollelemente (40) gegenüber der Bodenseite zurücktretend bereitgestellt sind, also nicht über diese hinausragen.

3. Beförderungssystem nach einem der Ansprüche 1 oder 2,
**dadurch gekennzeichnet,**
**dass** mindestens zwei Rollelemente (40) eine zueinander koaxiale Rotationsachse aufweisen.

4. Beförderungssystem nach einem der Ansprüche 1 bis 3,
**dadurch gekennzeichnet,**
**dass** die jeweilige Rotationsachse der Rollelemente räumlich festgelegt, vorzugsweise parallel zu den Verbindungselementen ausgerichtet ist.

5. Beförderungssystem nach einem der Ansprüche 1 bis 4,
**dadurch gekennzeichnet,**
**dass** die Rotationsachsen parallel zu den sich gegenüberstehenden Stirnseiten der mindestens zwei Beförderungseinheiten ausgerichtet sind.

6. Beförderungssystem nach einem der Ansprüche 1 bis 4,
**dadurch gekennzeichnet,**
**dass** der Grundkörper (20) parallel zur Rotationsachse der Rollelemente (40) zueinander beweglich gelagerte Segmente aufweist, wodurch der Grundkörper (20) an sich aufrollbar ausgebildet ist.

7. Beförderungssystem nach einem der Ansprüche 1 bis 5,
**dadurch gekennzeichnet,**
**dass** der Grundkörper (20) in einem Rahmen angeordnet ist.

8. Beförderungssystem nach Anspruch 6,
**dadurch gekennzeichnet,**
**dass** der Rahmen den Grundkörper (20) zumindest umfangsseitig umgibt und diesen fixiert.

9. Beförderungssystem nach einem der Ansprüche 1 bis 8,
**dadurch gekennzeichnet,**
**dass** die Verbindungselemente (30) gegenläufig orientierte Haltebereiche oder Haken aufweisen, welche ausgebildet sind, form- und/oder kraftschlüssig ineinander zu greifen.

10. Verfahren zum Be- und Entladen eines Flugzeugholds mittels eines Beförderungssystems nach einem der Ansprüche 1 bis 9, wobei in dem Hold das Beförderungssystem für den Be- oder Entladeprozess reversibel angeordnet wird, welches auf dem Boden des Holds ausgelegt wird,
wobei die Beförderungseinheiten in dem Flugzeughold zu der Beförderungslinie reversibel zusammengefügt werden und
wobei die Gepäckstücke bei Be- und Entladen direkt oder indirekt über die rollenaufweisende Oberfläche der Beförderungslinie geschoben werden, um diese ihrem Bestimmungsort zuzuführen,
**dadurch gekennzeichnet,**
**dass** das Beförderungssystem beim Beladen des Holds bedarfsgerecht gekürzt wird, so dass die Beförderungslinie bis in etwa zum jeweiligen Ladeendbereich des Holds reicht und beim Entladen bedarfsgerecht verlängert wird, um auch weiter im Inneren des Holds liegendes Gepäck der Beförderungslinie aufwandsarm zuführen zu können.

11. Verfahren zum Beladen nach Anspruch 10,
**dadurch gekennzeichnet,**
**dass** ein Gepäckförderband der Luke des Flugzeugholds zugestellt wird, dass die Beförderungslinie an das Gepäckförderband angeschlossen wird, wobei nachfolgendes Gepäck von dem Förderband bereits auf der Beförderungslinie befindliches Gepäck weiter in den Flugzeughold hineinschiebt.

## Claims

1. Flexibly adjustable transport system for relocating items in a hold of an aircraft, comprising at least two transport units jointly forming a transport surface, each having
a base body (20) with a top side and a bottom side
a plurality of roller elements (40) which protrude from the top side and form a contact surface for the items to be moved on and relative to the transport lines,
and preferably
connection elements (30) arranged on the front side of the transport unit for detachable connection of two transport units (10) each.
**characterized in that**
gaps between the roller elements (40) in the individual rows are provided at the same position, thereby creating slots formed across multiple rows of roller elements transverse to a rotation axis of the roller elements (40),
that the transport system has an item-carrying plate element or tray and
that the tray or plate element has on its underside facing the transport system at least two elongated elevations which are aligned parallel to each other and whose spacing is adapted to a distance between at least two of the slots/gaps between the roller elements (40).

2. Transport system according to claim 1,
**characterized in that**
the roller elements (40) are provided recessed relative to the bottom side, i.e. do not protrude beyond it.

3. Transport system according to one of claims 1 or 2,
**characterized in that**
at least two roller elements (40) have a coaxial rotation axis.

4. Transport system according to one of claims 1 to 3,
**characterized in that**
the respective rotation axis of the roller elements is spatially fixed, preferably aligned parallel to the connection elements.

5. Transport system according to one of claims 1 to 4,
**characterized in that**
the rotation axes are aligned parallel to the opposing front sides of the at least two transport units.

6. Transport system according to one of claims 1 to 4,
**characterized in that**
the base body (20) has segments that are movably mounted parallel to the rotation axis of the roller elements (40), whereby the base body (20) itself is designed to be rollable.

7. Transport system according to one of claims 1 to 5,
**characterized in that**
the base body (20) is arranged in a frame.

8. Transport system according to claim 6,
**characterized in that**
the frame surrounds the base body (20) at least on the perimeter and fixes it.

9. Transport system according to one of claims 1 to 8,
**characterized in that**
the connection elements (30) have oppositely oriented holding areas or hooks which are designed to interlock in a form-fitting and/or force-fitting manner.

10. Method for loading and unloading an aircraft hold using a transport system according to one of claims 1 to 9, wherein the transport system is reversibly arranged in the hold for the loading or unloading process, which is laid out on the floor of the hold,
wherein the transport units are reversibly assembled into the transport line in the aircraft hold and
wherein the luggage items are pushed directly or indirectly over the roller-equipped surface of the transport line during loading and unloading to guide them to their destination,
**characterized in that**
the transport system is shortened as needed when loading the hold, so that the transport line extends approximately to the respective end loading area of the hold and is extended as needed when unloading, in order to be able to feed luggage lying further inside the hold to the transport line with little effort.

11. Method for loading according to claim 10,
**characterized in that**
a luggage conveyor belt is positioned at the hatch of the aircraft hold, that the transport line is connected to the luggage conveyor belt, whereby subsequent luggage from the conveyor belt pushes luggage already on the transport line further into the aircraft hold.

## Revendications

1. Système de transport flexible pour le déplacement d'objets usuels dans une soute d'avion, comprenant au moins deux unités de transport formant ensemble une surface de transport, chacune ayant
un corps de base (20) avec une face supérieure et une face inférieure
une pluralité d'éléments de roulement (40) qui dépassent de la face supérieure et forment une surface de contact pour les objets usuels à déplacer sur et par rapport aux lignes de transport,
et de préférence
des éléments de connexion (30) disposés sur les côtés frontaux de l'unité de transport, pour la connexion amovible de deux unités de transport (10) respectives.
**caractérisé en ce que**
des espaces entre les éléments de roulement (40) dans les rangées individuelles sont prévus au même endroit, créant ainsi des fentes formées transversalement à un axe de rotation des éléments de roulement (40) sur une pluralité de rangées d'éléments de roulement,
que le système de transport comprend un élément de plateau ou un plateau porteur d'objets usuels et
que le plateau ou l'élément de plateau présente sur sa face inférieure tournée vers le système de transport au moins deux élévations allongées qui sont alignées parallèlement l'une à l'autre et dont l'espacement est adapté à un espacement entre au moins deux des fentes/espaces entre les éléments de roulement (40).

2. Système de transport selon la revendication 1,
**caractérisé en ce que**
les éléments de roulement (40) sont fournis en retrait par rapport à la face inférieure, c'est-à-dire qu'ils ne dépassent pas de celle-ci.

3. Système de transport selon l'une des revendications 1 ou 2,
**caractérisé en ce que**
au moins deux éléments de roulement (40) ont un axe de rotation coaxial l'un par rapport à l'autre.

4. Système de transport selon l'une des revendications 1 à 3,
**caractérisé en ce que**
l'axe de rotation respectif des éléments de roulement est spatialement fixé, de préférence aligné parallèlement aux éléments de connexion.

5. Système de transport selon l'une des revendications 1 à 4,
**caractérisé en ce que**
les axes de rotation sont alignés parallèlement aux côtés frontaux opposés des au moins deux unités de transport.

6. Système de transport selon l'une des revendications 1 à 4,
**caractérisé en ce que**
le corps de base (20) comprend des segments mobiles les uns par rapport aux autres parallèlement à l'axe de rotation des éléments de roulement (40), de sorte que le corps de base (20) est conçu pour être enroulable sur lui-même.

7. Système de transport selon l'une des revendications 1 à 5,
**caractérisé en ce que**
le corps de base (20) est disposé dans un cadre.

8. Système de transport selon la revendication 6,
**caractérisé en ce que**
le cadre entoure le corps de base (20) au moins sur son pourtour et le fixe.

9. Système de transport selon l'une des revendications 1 à 8,
**caractérisé en ce que**
les éléments de connexion (30) présentent des zones de maintien ou des crochets orientés en sens inverse, conçus pour s'emboîter par complémentarité de forme et/ou par friction.

10. Procédé de chargement et de déchargement d'une soute d'avion au moyen d'un système de transport selon l'une des revendications 1 à 9, dans lequel le système de transport est disposé de manière réversible dans la soute pour le processus de chargement ou de déchargement, lequel est déployé sur le sol de la soute,
où les unités de transport sont assemblées de manière réversible dans la soute de l'avion pour former la ligne de transport et
où les bagages sont poussés directement ou indirectement sur la surface à rouleaux de la ligne de transport lors du chargement et du déchargement, afin de les acheminer vers leur destination,
**caractérisé en ce que**
le système de transport est raccourci selon les besoins lors du chargement de la soute, de sorte que la ligne de transport s'étende approximativement jusqu'à la zone de chargement finale respective de la soute et est allongé selon les besoins lors du déchargement, afin de pouvoir acheminer facilement vers la ligne de transport les bagages situés plus à l'intérieur de la soute.

11. Procédé de chargement selon la revendication 10,
**caractérisé en ce que**
un tapis roulant à bagages est placé devant la trappe de la soute de l'avion, que la ligne de transport est raccordée au tapis roulant à bagages, les bagages suivants du tapis roulant poussant les bagages déjà présents sur la ligne de transport plus loin dans la soute de l'avion.
